# EUROPÄISCHE PATENTSCHRIFT

(11) **EP 4 208 660 B1**
(45) Veröffentlichungstag und Bekanntmachung des Hinweises auf die Patenterteilung: **27.03.2024**
(21) Anmeldenummer: 21836035.2
(22) Anmeldetag: 06.12.2021
(51) Int. Cl.: F16L 37/14

(54) **WATERTRAIN CLIP**
WATER DRAIN CLIP
CLIP D'ÉVACUATION D'EAU

(30) Priorität: 18.12.2020 DE 202020107414 U
(43) Veröffentlichungstag der Anmeldung: 12.07.2023
(73) Patentinhaber: Neoperl GmbH, 79379 Müllheim (DE)
(72) Erfinder: KOWOL, Jacek, 79194 Gundelfingen (DE)
(74) Vertreter: Mertzlufft-Paufler, Cornelius
(86) Internationale Anmeldenummer: PCT/EP2021/084421
(87) Internationale Veröffentlichungsnummer: WO 2022/128575

(56) Entgegenhaltungen:
- EP-A2- 0 908 659
- DE-A1-102017 220 448
- US-A1- 2007 000 833
- US-A1- 2012 018 020
- US-A1- 2013 221 665

## Beschreibung

Die Erfindung betrifft einen Schlauchanschluss mit zumindest einer Schlauchaufnahme, in die ein Schlauchende einführbar ist. Beispielsweise umfasst der Schlauchanschluss mehrere Schlauchaufnahmen, in die jeweils ein Schlauchende einführbar ist.

An einen solchen Schlauchanschluss können mehrere Schlauchenden von mehreren Schläuchen angeschlossen sein. Beispielsweise werden ein Ablauf und ein oder mehrere Zuläufe, in denen etwa kaltes und warmes Wasser getrennt voneinander in einer Mischkammer zugeleitet werden, angeschlossen.

Für derartige Schlauchanschlüsse sind unterschiedlichen Verbindungen bekannt, die das jeweilige Schlauchende mit der Schlauchaufnahme koppeln. Beispielsweise werden hierfür Klebe-Schraubverbindungen oder quer einzuführende metallische Sicherungsplatten vorgesehen.

Aus US 2007/000833 A1 ist ein modulares Reinigungssystem zur Filterung von Wasser bekannt, das in der Getränke- und Lebensmittelindustrie verwendet wird.

In US 2012/018020 A1 ist eine Flüssigkeitsabgabevorrichtung beschrieben, die eine Wasserwegbaugruppe, eine Ventilbaugruppe und einen Wasserwegadapter umfasst, um die Wasserwegbaugruppe mit der Ventilbaugruppe zu verbinden.

Aus EP 0 908 659 A2 ist eine Fluid-Steckverbindung bekannt.

Aus US 2013/221665 A1 ist ein Rohrverbindungsstück bekannt.

DE 10 2017 220448 A1 beschreibt eine Fluidleitungskupplung zum mechanischen und fluidischen Kuppeln eines fluidführenden ersten Bauteils mit einem fluidführenden zweiten Bauteil.

Solche Verbindungen weisen jedoch den Nachteil auf, dass sie aufwendig herstellbar, aufwendig zu handhaben oder nur schwer oder nicht wieder lösbar sind.

Der vorliegenden Erfindung liegt daher die Aufgabe zugrunde, den Schlauchanschuss zu verbessern sowie die Verbindung eines Schlauchendes mit dem Schlauchanschluss zu erleichtern.

Die Lösung diese Aufgabe besteht bei dem Schlauchanschluss der eingangs erwähnten Art insbesondere darin, dass ein Clip die zumindest eine Schlauchaufnahme durchgreift, um in eine Clipaufnahme des Schlauchendes einzugreifen, wobei der Clip an der zumindest einen Schlauchaufnahme selbsthaltend ausgebildet ist, wobei die zumindest eine Schlauchaufnahme eine von drei Schlauchaufnahmen ist, in die ein jeweiliges Schlauchende einführbar ist, und der Clip mehrere Arretierungsstege umfasst, die die drei Schlauchaufnahmen durchgreifen.

Beispielsweise ist in einer Ausgestaltung vorgesehen, dass die zumindest eine Schlauchaufnahme an einer Schlauchumgreifung bzw. einem Gehäuse ausgebildet ist und der Clip das Gehäuse im Bereich der Schlauchaufnahme, insbesondere durch eine Arretierungsöffnung des Gehäuses hindurch, durchgreift, wobei der Clip am Gehäuse im Bereich der Schlauchaufnahme selbsthaltend ausgebildet ist.

Die Erfindung beruht auf der Erkenntnis, dass durch die Nutzung eines Clips, der an der Schlauchaufnahme selbsthaltend ausgebildet ist bzw. an diese anclipbar ist und der gleichzeitig die Schlauchaufnahmen derart durchgreift, dass er in eine Clipaufnahme am Schlauchende eingreift, die Verbindung des Schlauchendes oder der Schlauchenden mit dem Schlauchanschluss erleichtert ist. Beispielsweise ist der Clip lösbar an der Schlauchaufnahme anclipbar. Der beschriebene Schlauchanschluss erleichtert somit insbesondere die klebemittelfreie Verbindung eines Schlauchendes mit dem Schlauchanschluss bzw. den Austausch eines Schlauchendes an dem Schlauchanschluss.

In einer weiteren Ausgestaltung ist vorgesehen, dass der Clip einstückig ausgebildet ist. Ferner ist in einer weiteren Ausgestaltung vorgesehen, dass der Clip aus einem elastischen Material geformt ist.

Die elastischen Eigenschaften des Clips ermöglichen, dass der Clip mit der Schlauchaufnahme oder mit dem Gehäuse formschlüssig verbindbar ist. Insbesondere kann der Clip seitlich an die Schlauchaufnahme oder an das Gehäuse angebracht werden, so dass der Clip die Schlauchaufnahme oder das Gehäuse umschließt. Dies erleichtert die Anbringung des Clips an die Schlauchaufnahme oder an das Gehäuse und die Loslösung von der- bzw. demselben.

In einer Ausgestaltung ist vorgesehen, dass der Clip zumindest eine Auflagefläche umfasst, die zumindest teilweise an dem Gehäuse aufliegt, vorzugsweise das Gehäuse zumindest teilweise umgreift.

Die Auflagefläche des vorzugsweise aus einem elastischen Material geformten Clips stellt ein besonders einfaches Mittel bereit, das Gehäuse zu umgreifen und den Clip selbsthaltend an der Schlauchaufnahme oder dem Gehäuse zu arretieren bzw. anzuclippen.

In einer Ausgestaltung ist vorgesehen, dass der Clip zumindest einen Arretierungssteg umfasst, wobei der zumindest eine Arretierungssteg zumindest eine Schlauchaufnahme, insbesondere mehrere Schlauchaufnahmen, durchgreift.

Beispielsweise umfasst der Clip mehrere Arretierungsstege, die jeweils durch eine oder mehrere Arretierungsöffnungen hindurch, eine oder mehrere Schlauchaufnahmen durchgreifen. Dies kann für einen sicheren Halt der Schlauchenden in den Schlauchaufnahmen sorgen. Ferner können derart mehreren Schlauchenden in mehreren Schlauchaufnahmen auf einfache Weise mittels eines einzigen Clips in den Schlauchaufnahmen gehalten werden.

In einer Ausgestaltung ist vorgesehen, dass der zumindest eine Arretierungssteg aus der zumindest einen Auflagefläche herausragt, und/oder wobei die zumindest eine Auflagefläche den zumindest einen Arretierungssteg umschließt.

Greift bei dieser Ausgestaltung der Arretierungssteg durch die Arretierungsöffnung hindurch oder in die Arretierungsöffnung ein, so liegt die Auflagefläche neben der Arretierungsöffnung auf und arretiert den Clip an der Schlauchaufnahme oder dem Gehäuse bzw. verleiht dem Arretierungsclip einen festen Halt an der Schlauchaufnahme oder an dem Gehäuse.

In einer Ausgestaltung ist vorgesehen, dass der Clip die zumindest eine Schlauchaufnahme an zumindest der Hälfte eines Umfangs umgreift.

Dazu kann der Clip beispielsweise mehrere Schlauchaufnahmen umgreifen und jeweils teilweise auf den mehreren Schlauchaufnahmen oder den entsprechenden Gehäusen aufliegen. Dies hat den Vorteil, dass der Arretierungsclip form- bzw. kraftschlüssig mit der oder den Schlauchaufnahme(n) oder dem oder den Gehäuse(n) verbunden ist. Somit ist ein fester Halt des Clips an dem oder den Gehäuse (n) bzw. an der oder den Schlauchaufnahme(n) ermöglicht.

In einer Ausgestaltung ist vorgesehen, dass der Clip mehrere Arretierungsstege umfasst, wobei einer der mehreren Arretierungsstege in eine Längsrichtung über einen anderen der mehreren Arretierungsstege hinausragt.

Beispielsweise umfasst der Clip zwei äußere Arretierungsstege, die ein oder mehrere Schlauchenden um- und durchgreifen und einen mittleren, längeren Arretierungssteg, der die einen oder mehreren Schlauchenden durchreift. Der mittlere Arretierungssteg kann derart beim Einschieben des Arretierungsclips die Schlauchenden vorfixieren oder positionieren, so dass der Clip einfach aufgesetzt werden kann.

In einer Ausgestaltung ist vorgesehen, dass der Clip zumindest ein Rastmittel aufweist, wobei das zumindest eine Rastmittel den Clip in zumindest einer Bewegungsrichtung des Clips, vorzugsweise quer zur Einführrichtung des Schlauchendes, arretiert.

Damit kann verhindert werden, dass beim Abziehen des Clips von der Schlauchaufnahme sich der Clip von der Schlauchaufnahme vollständig löst.

In einer Ausgestaltung ist vorgesehen, dass das zumindest eine Rastmittel eine Hinterschneidung am oder im Bereich der Schlauchaufnahme hintergreift. Dies hat den Vorteil einer vereinfachten Anbringung und Arretierung des Clips an der Schlauchaufnahme.

In einer Ausgestaltung ist vorgesehen, dass das zumindest eine Rastmittel den Clip in einer Rastposition arretiert und der Clip in der Rastposition die zumindest eine Schlauchaufnahme nicht durchgreift.

Beispielsweise ist das zumindest eine Rastmittel in Verlängerung zu zumindest einem jeweiligen Arretierungssteg ausgebildet. Insbesondere kann jeweils ein Rastmittel in Verlängerung zu jeweils einem äußeren von den mehreren Arretierungsstege ausgebildet sein. Hiermit kann der Clip in der Rastposition gehalten werden, während das Schlauchende in die Schlauchaufnahme einführbar ist. Dies verhindert den Verlust des Clips beim Einführen oder Austausch von Schlauchenden.

Nachstehend wird die Erfindung anhand mehrerer bevorzugter Ausführungsbeispiele noch näher beschrieben.

Es zeigt:
- Fig. 1: eine dreidimensionaler Explosionsdarstellung eines Schlauchanschlusses,
- Fig. 2: eine dreidimensionale Darstellung des Schlauchanschlusses im zusammengesetzten Zustand,
- Fig. 3: eine dreidimensionale Darstellung eines Clips in einer ersten Ausführungsform,
- Fig. 4: drei Schnittdarstellungen des Schlauchanschlusses im zusammengesetzten Zustand
- Fig. 5: eine dreidimensionale Darstellung eines Clips in einer zweiten Ausführungsform,
- Fig. 6 A: eine dreidimensionale Darstellung des Schlauchanschlusses mit dem Clip 6 in der zweiten Ausführungsform,
- Fig. 6 B: Schnittdarstellungen des Schlauchanschlusses 1 mit dem Clip in der zweiten Ausführungsform.

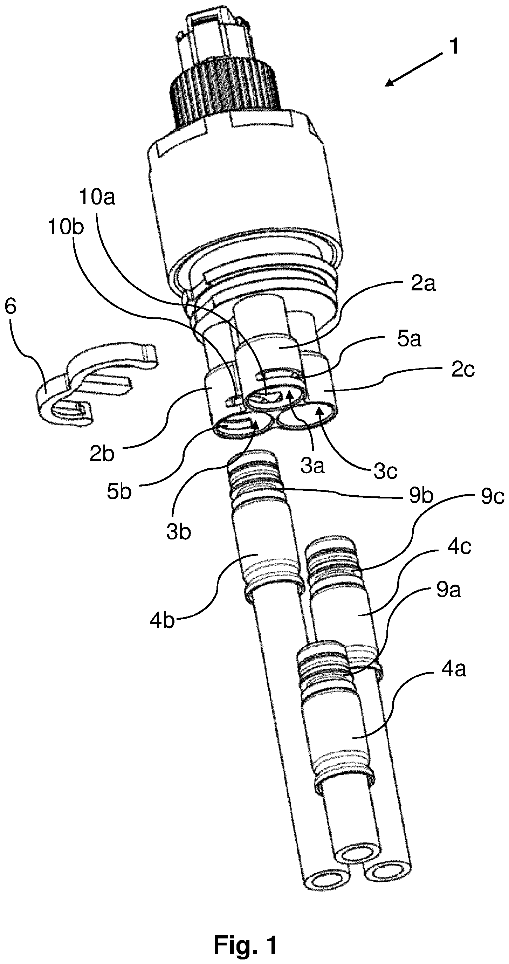

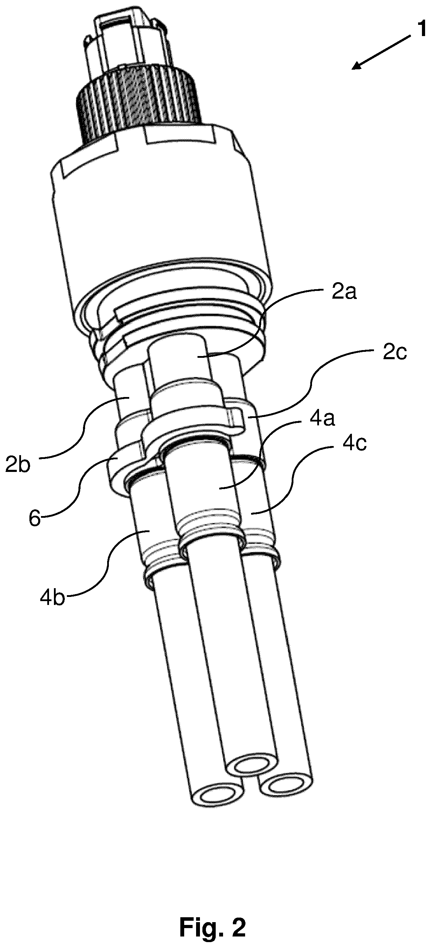

Figur 1 zeigt eine dreidimensionale Explosionsdarstellung eines Schlauchanschlusses 1. Figur 2 zeigt eine dreidimensionale Darstellung des Schlauchanschlusses im zusammengesetzten Zustand. Gleiche Merkmale sind mit gleichen Bezugszeichen versehen. Der Schlauchanschluss 1 umfasst eine Schlauchaufnahme 3a, in die ein Schlauchende 4a einführbar ist. Der Schlauchanschluss 1 weist ferner eine zweite Schlauchaufnahme 3b und eine dritte Schlauchaufnahme 3c auf, in die ein jeweiliges zweites Schlauchende 4b und drittes Schlauchende 4c einführbar sind. Der Schlauchanschluss 1 umfasst einen Clip 6, der im zusammengesetzten Zustand der Schlauchaufnahme 3a mit dem Clip 6 die Schlauchaufnahme 3a durchgreift. Ebenso durchgreift der Clip 6 die zweite Schlauchaufnahme 3b und die dritte Schlauchaufnahme 3c.

Die Schlauchaufnahmen 3a, 3b, 3c sind an einem jeweiligen ersten, zweiten und dritten Gehäuse 2a, 2b, 2c ausgebildet. Die Gehäuse 2a, 2b, 3c umfassen jeweils zumindest eine Arretierungsöffnung. Im gezeigten Beispiel umfassen das erste und das zweite Gehäuse 2a, 2b jeweils eine erste Arretierungsöffnung 5a, 5b und jeweils eine zweite Arretierungsöffnung 10a, 10b.

Im zusammengesetzten Zustand durchgreift der Clip 6 das erste Gehäuse 2a und das zweite Gehäuse 2b im Bereich der ersten und zweiten Schlauchaufnahme 3a, 3b, in dem der Clip 6 durch die Arretierungsöffnungen 5a, 5b, 10a, 10b durchgreift oder in diese eingreift.

Der Clip 6 ist im zusammengesetzten Zustand des Clips 6 und des Schlauchanschlusses 1 im Bereich der Schlauchaufnahmen 3a, 3b selbsthaltend ausgebildet. Der Clip 6 ist an dem ersten Gehäuse 2a und dem zweiten Gehäuse 2b selbsthaltend ausgebildet.

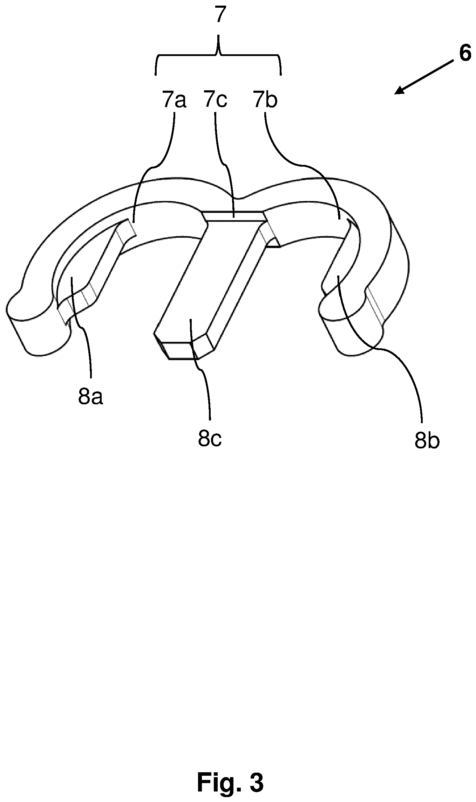

Die Figur 3 zeigt den Clip 6 in einer ersten Ausführungsform in dreidimensionaler Ansicht. Der Clip 6 ist einstückig ausgebildet. Der Clip 6 umfasst eine Auflagefläche 7. Der Clip 6 umfasst zwei äußere Arretierungsstege 8a, 8b und einen mittleren Arretierungssteg 8c. Zumindest die äußeren Arretierungsstege 8a, 8b ragen aus der Auflagefläche 7 heraus. Zumindest die äußeren Arretierungsstege 8a, 8b werden von der Auflagefläche 7 umschlossen. Die Arretierungsstege 8a, 8b, 8c sind länglich ausgestaltet. Der mittlere Arretierungssteg 8c ist länger als die äußeren Arretierungsstege 8a, 8b. Mit anderen Worten: Der mittlere Arretierungssteg 8c ragt über die äußeren Arretierungsstege 8a, 8b in eine Längsrichtung der Arretierungsstege 8a, 8b, 8c hinaus.

Die Auflagefläche 7 umfasst eine erste Auflagefläche 7a, eine zweite Auflagefläche 7b und eine dritte Auflagefläche 7c. Der erste äußere Arretierungssteg 8a ragt aus der ersten Auflagefläche 7a heraus bzw. wird von der ersten Auflagefläche 7a umschlossen. Der zweite äußere Arretierungsstege 8b ragt aus der zweiten Auflagefläche 7b heraus bzw. wird von der zweiten Auflagefläche 7b umschlossen. Der mittlere Arretierungssteg 8c ist zwischen der ersten und der zweiten Auflagefläche 7a, 7b angeordnet. Im zusammengesetzten Zustand des Clips 6 mit dem Schlauchanschluss 1 liegt die erste Auflagefläche 7a auf dem ersten Gehäuse 2a und die zweite Auflagefläche 7b auf dem zweiten Gehäuse 2b auf.

Der mittlere Arretierungssteg 8c ragt im gezeigten Beispiel über die Auflagefläche 7 oder die erste und zweite Auflageflächen 7a, 7b in Längsrichtung hinaus, wobei die Auflagefläche 7 oder die erste und zweite Auflagefläche 7a, 7b eine Krümmung in Richtung der Längsrichtung aufweist bzw. aufweisen.

Im gezeigten Beispiel ragt der mittlere Arretierungssteg 8c aus der dritten Auflagefläche 7c heraus bzw. ist von dieser umschlossen.

Wie in den Figuren 1 und 2 erkennbar, liegt der Clip 6 im Bereich der ersten Schlauchaufnahme 3a auf dem Schlauchanschluss 1 auf. Ebenfalls liegt der Clip 6 im Bereich der zweiten Schlauchaufnahme 3a auf dem Schlauchanschluss 1 auf. Anders ausgedrückt: Der Clip 6 liegt im Bereich der Schlauchaufnahmen 3a, 3b auf den Gehäusen 2a, 2b auf.

Der Clip 6 umgreift die erste Schlauchaufnahme 3a und die zweite Schlauchaufnahme 3b bzw. das erste Gehäuse 2a und das zweite Gehäuse 2b. Der Clip 6 bzw. die Auflagefläche 7 umgreift die erste Schlauchaufnahme 3a und die zweite Schlauchaufnahme 3b bzw. das erste Gehäuse 2a und das zweite Gehäuse 2b an jeweils mehr als der Hälfte eines Umfangs der ersten Schlauchaufnahme 3a und der zweiten Schlauchaufnahme 3b bzw. des ersten Gehäuses 2a und des zweite Gehäuses 2b.

Der Clip 6 ist zumindest teilweise aus einem elastischen Material geformt. Der Clip 6 ist in eine Querrichtung quer zur Einführrichtung der Schlauchenden 3a, 3b in die Arretierungsöffnungen 5a, 5b, 10a, 10b einführbar. Der Clip 6 ist durch seine elastische Form an die Gehäuse 2a, 2b anclipbar. Die Querrichtung entspricht im zusammengesetzten Zustand der Längsrichtung der länglichen Arretierungsstege.

Der mittlere Arretierungssteg 8c ist in die zweite Arretierungsöffnungen 10a, 10b einführbar, ohne dass der Clip 6 bzw. die Auflagefläche 7 die Gehäuse 2a, 2b umgreift. Derart stellt der mittlere Arretierungssteg 8c ein Führungselement dar beim Einführen des Clips 6 in die ersten Arretierungsöffnungen 5a, 5b der Gehäuse 2a, 2b dar.

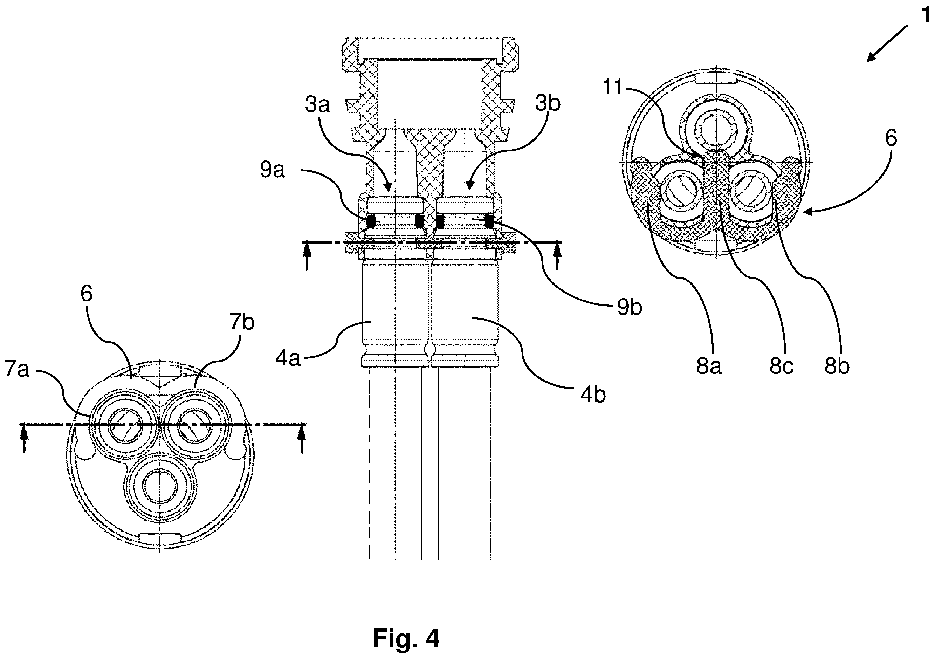

Im zusammengesetzten Zustand durchgreifen die äußeren Arretierungsstege 8a, 8b jeweils eine der ersten Arretierungsöffnungen 5a, 5b der Gehäuse 2a, 2b. Der mittlere Arretierungssteg 8c durchgreift die zweiten Arretierungsöffnungen 10a, 10b der Gehäuse 2a, 2b. Der mittlere Arretierungssteg durchgreift zudem eine dritte Arretierungsöffnung 11 (siehe Figur 4) in dem dritten Gehäuse 2c im Bereich der dritten Schlauchaufnahme 3c.

Der erste äußere Arretierungssteg 8a greift im zusammengesetzten Zustand in eine erste Clipaufnahme 9a des ersten Schlauchendes 4a ein. Im gezeigten Beispiel ist die erste Clipaufnahme 9a als eine Verjüngung eines Umfangs des ersten Schlauchendes 4a ausgestaltet. Der zweite äußere Arretierungssteg 8b greift im zusammengesetzten Zustand in eine zweite Clipaufnahme 9b des zweiten Schlauchendes 4b bzw. in eine Verjüngung eines Umfangs des zweiten Schlauchendes 4b ein. Ebenso greift der mittlere Arretierungssteg 8c im zusammengesetzten Zustand in eine dritte Clipaufnahme 9c des dritten Schlauchendes 4c bzw. in eine Verjüngung eines Umfangs des dritten Schlauchendes 4c ein. Anders ausgedrückt: Der mittlere Arretierungssteg 8c kontaktiert das dritte Schlauchende 4c. Derart sichert der mittlere Arretierungssteg 8c das dritte Schlauchende 4c in der dritten Schlauchaufnahme 3c. Darüber hinaus greift der mittlere Arretierungssteg 8c im zusammengesetzten Zustand jeweils in die erste und zweite Clipaufnahme 9a, 9b bzw. in eine jeweilige Verjüngung des Umfangs des ersten und zweiten Schlauchendes 4a, 4b oder in weitere Clipaufnahmen des ersten und zweiten Schlauchendes 4a, 4b ein.

Mit anderen Worten: Der Clip 6 sichert das erste Schlauchende 4a und das zweite Schlauchende 4b jeweils beidseitig, nämlich das erste Schlauchende 4a mittels des ersten äußeren Arretierungsstegs 8a und des mittleren Arretierungsstegs 8c und das zweite Schlauchende 4b mittels des zweiten äußeren Arretierungsstegs 8b und des mittleren Arretierungsstegs 8c. Der Clip 6 sichert das dritte Schlauchende 4c punktuell mittels des mittleren Arretierungsstegs 8c. Vorzugsweise sind die ersten und zweiten Schlauchenden 4a, 4b von jeweils druckbelasteten Schläuchen umfasst. Beispielsweise ist das erste Schlauchende 4a von einem Kaltwasseranschluss umfasst und das zweite Schlauchende 4b von einem Heißwasseranschluss umfasst. Ferner ist vorzugsweise das dritte Schlauchende 4c von einem Niederdruckschlauch umfasst. Beispielsweise ist das dritte Schlauchende 4c von einem Abwasseranschluss oder einem Mischwasseranschluss umfasst.

Der mittlere Arretierungssteg 8c greift beim Einführen des Clips in die erste und zweite Clipaufnahme 9a, 9b oder in die weiteren Clipaufnahmen der Schlauchenden 4a, 4b ein, bevor die äußeren Arretierungsstege 8a, 8b in die Arretierungsöffnungen 5a, 5b bzw. in die erste und zweite Clipaufnahme 9a, 9b eingreifen. Derart kann der mittlere Arretierungssteg 8c das erste und das zweite Schlauchende 4a, 4b vorfixieren, bevor die äußeren Arretierungsstege 8a, 8b in die erste und zweite Clipaufnahme 9a, 9b eingreifen.

Die Figur 4 zeigt drei Schnittdarstellungen des Schlauchanschlusses 1 im mit dem Clip 6 und den Schlauchenden 4a, 4b zusammengesetzten Zustand. Gleiche Merkmale sind mit gleichen Bezugszeichen versehen.

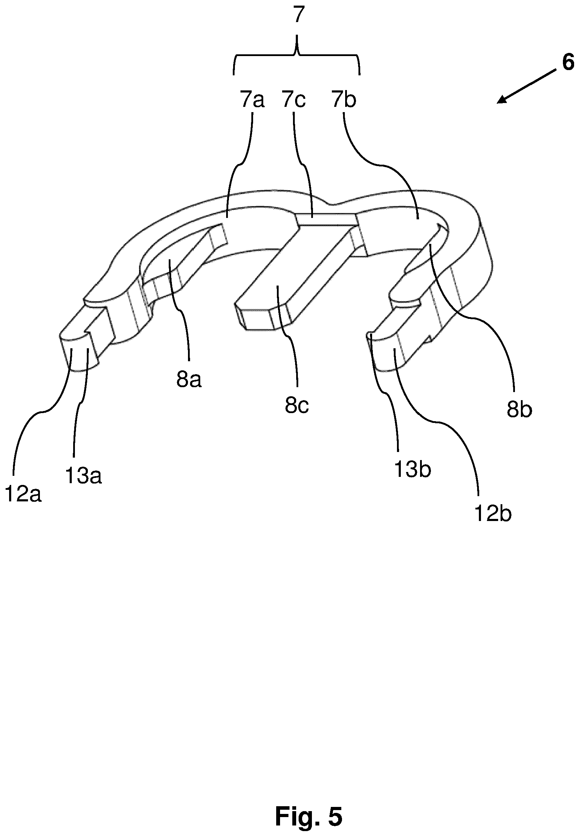

Die Figur 5 zeigt den Clip 6 in einer zweiten Ausführungsform in dreidimensionaler Ansicht. Gleiche Merkmale sind mit gleichen Bezugszeichen versehen. Neben den mit Bezug auf Figur 3 beschriebenen Merkmalen des Clips 6 umfasst der Clip 6 ein erstes Rastmittel 12a und ein zweites Rastmittel 12b bzw. eine erste und eine zweite Auszugsicherung 12a, 12b. Die Rastmittel 12a und 12b sind jeweils in Verlängerung zu einem der beiden äußeren Arretierungsstege 8a und 8b ausgebildet oder in Verlängerung zu einer der ersten und zweiten Auflagefläche 7a, 7b in Längsrichtung ausgebildet. Die Rastmittel 12a und 12b sind an der Auflagefläche 7 angebracht bzw. an jeweils einer der ersten und zweiten Auflagefläche 7a, 7b angebracht. Die Rastmittel 12a und 12b ragen in einer Längsrichtung der Arretierungsstege 8a, 8b, 8c über die Arretierungsstege 8a, 8b, 8c hinaus. Das erste Rastmittel 12a umfasst einen ersten Vorsprung 13a. Das zweite Rastmittel 12b umfasst einen zweiten Vorsprung 13b.

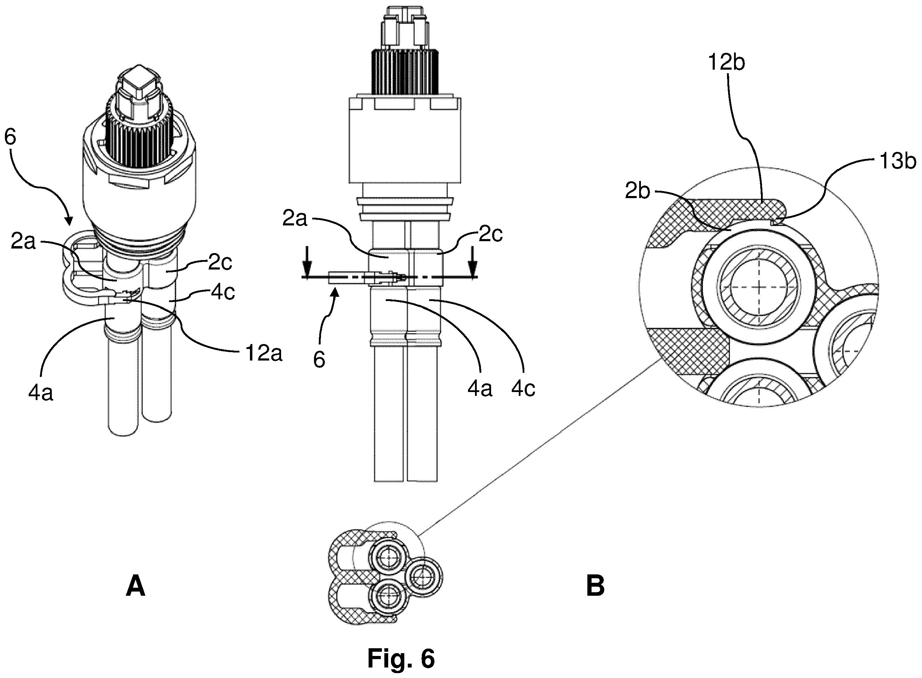

Die Figur 6 A zeigt eine dreidimensionale Darstellung eines Schlauchanschlusses 1 mit einem Clip 6 in der zweiten Ausführungsform. Die Figur 6 B zeigt Schnittdarstellungen eines Schlauchanschlusses 1 mit einem Clip 6 in der zweiten Ausführungsform. Gleiche Merkmale sind mit gleichen Bezugszeichen versehen.

Wie in Figur 6 dargestellt, weist das erste Gehäuse 2a im Bereich der ersten Schlauchaufnahme 3a eine Hinterschneidung bzw. eine Rastöffnung auf. Das Rastmittel 12a greift im zusammengesetzten Zustand des Clips 6 mit dem Schlauchanschluss 1 hinter die Hinterschneidung bzw. greift in die Rastöffnung des ersten Gehäuses 2a. Das erste Rastmittel 12a weist hierfür einen der Hinterschneidung bzw. der Rastöffnung des ersten Gehäuses 2a entsprechenden Vorsprung 13a auf. Ebenso hintergreift das Rastmittel 12b im zusammengesetzten Zustand des Clips 6 mit dem Schlauchanschluss 1 eine Hinterschneidung bzw. eine Rastöffnung des zweiten Gehäuses 2b. Das zweite Rastmittel 12b weist hierfür einen der Hinterschneidung bzw. der Rastöffnung des zweiten Gehäuses 2b entsprechenden Vorsprung 13b auf.

Die Rastmittel 12a, 12b arretieren den Clip 6, wie in Figur 6 dargestellt, in einer Rastposition. Die Rastmittel 12a, 12b verhindern, dass sich der Clip 6 einfach von den Gehäusen 2a, 2b lösen lässt bzw. selbst löst. In der Rastposition greift keiner der Arretierungsstege 8a, 8b, 8c in eine der Schlauchaufnahmen 3a, 3b, 3c des Schlauchanschlusses 1 ein bzw. durch diese hindurch. Insbesondere durchgreift der mittlere Arretierungssteg 8c nicht die Schlauchaufnahmen 3a und 3b. Im gezeigten Beispiel ragen die Rastmittel 12a, 12b in eine Längsrichtung der Arretierungsstege 8a, 8b, 8c über die Arretierungsstege 8a, 8b, 8c hinaus, insbesondere in eine Längsrichtung quer zur Einführungsrichtung eines Schlauchendes in eine der Schlauchaufnahmen 3a, 3b. Mit anderen Worten: Der jeweilige Vorsprung 13a, 13b des bzw. der Rastmittel 12a, 12b ragt in eine Längsrichtung der Arretierungsstege 8a, 8b, 8c über die Arretierungsstege 8a, 8b, 8c hinaus.

Der Clip 6 in der zweiten Ausführungsform ermöglicht eine Positionierung bzw. Arretierung des Clips 6 an den Gehäusen 2a, 2b, so dass der Clip 6 die Schlauchaufnahme 3a, 3b nicht durchgreift und damit jeweilige Schlauchenden in die Schlauchaufnahmen einführbar sind.

### Bezugszeichenliste

- 1: Schlauchanschluss
- 2a: Erstes Gehäuse
- 2b: Zweites Gehäuse
- 2c: Drittes Gehäuse
- 3a: Erste Schlauchaufnahme
- 3b: Zweite Schlauchaufnahme
- 3c: Dritte Schlauchaufnahme
- 4a: Erstes Schlauchende
- 4b: Zweites Schlauchende
- 4c: Drittes Schlauchende
- 5a: Erste Arretierungsöffnung des ersten Gehäuses
- 5b: Erste Arretierungsöffnung des zweiten Gehäuses
- 6: Clip
- 7: Auflagefläche
- 7a: Erste Auflagefläche
- 7b: Zweite Auflagefläche
- 8a: Erster äußere Arretierungssteg
- 8b: Zweiter äußere Arretierungssteg
- 8c: Mittlerer Arretierungssteg
- 9a: Clipaufnahme des ersten Schlauchendes
- 9b: Clipaufnahme des zweiten Schlauchendes
- 9c: Clipaufnahme des dritten Schlauchendes
- 10a: Zweite Arretierungsöffnung des ersten Gehäuses
- 10b: Zweite Arretierungsöffnung des zweiten Gehäuses
- 11: Arretierungsöffnung des dritten Gehäuses
- 12a: Erstes Rastmittel
- 12b: Zweites Rastmittel
- 13a: Erster Vorsprung des ersten Rastmittels
- 13b: Zweiter Vorsprung des zweiten Rastmittels

## Patentansprüche

1. Schlauchanschluss (1) mit zumindest einer Schlauchaufnahme (3a), in die ein Schlauchende (4a) einführbar ist, wobei ein Clip (6) die zumindest eine Schlauchaufnahme (3a) durchgreift, um in eine Clipaufnahme (9a) des Schlauchendes (4a) einzugreifen, wobei der Clip (6) an der zumindest einen Schlauchaufnahme (3a) selbsthaltend ausgebildet ist, **dadurch gekennzeichnet, dass** die zumindest eine Schlauchaufnahme (3a) eine von drei Schlauchaufnahmen (3a, 3b, 3c) ist, in die ein jeweiliges Schlauchende (4a, 4b, 4c) einführbar ist, und dass der Clip (6) mehrere Arretierungsstege (8a, 8b, 8c) umfasst, die die drei Schlauchaufnahmen (3a, 3b, 3c) durchgreifen.

2. Schlauchanschluss (1) nach Anspruch 1, **dadurch gekennzeichnet, dass** die zumindest eine Schlauchaufnahme (3a) an einem Gehäuse (2a) ausgebildet ist und der Clip (6) das Gehäuse (2a) im Bereich der zumindest einen Schlauchaufnahme (3a), insbesondere durch eine Arretierungsöffnung (5a) des Gehäuses (2a) hindurch, durchgreift, wobei der Clip (6) am Gehäuse (2a) im Bereich der zumindest einen Schlauchaufnahme (3a) selbsthaltend ausgebildet ist.

3. Schlauchanschluss (1) nach einem der vorhergehenden Ansprüche, **dadurch gekennzeichnet, dass** der Clip (6) einstückig ausgebildet ist.

4. Schlauchanschluss (1) nach einem der vorhergehenden Ansprüche, **dadurch gekennzeichnet, dass** der Clip (6) aus einem elastischen Material geformt ist.

5. Schlauchanschluss (1) nach einem der Ansprüche 2-4, **dadurch gekennzeichnet, dass** der Clip (6) zumindest eine Auflagefläche (7) umfasst die zumindest teilweise an dem Gehäuse (2a) aufliegt, vorzugsweise das (2a) Gehäuse zumindest teilweise umgreift.

6. Schlauchanschluss (1) nach einem vorhergehenden Anspruch, **dadurch gekennzeichnet, dass** die mehreren Arretierungsstege (8a, 8b, 8c) einen ersten äußeren Arretierungssteg (8a), einen zweiten äußeren Arretierungssteg (8b) und einen mittleren Arretierungssteg (8c) umfassen, die die drei Schlauchaufnahmen (3a, 3b, 3c), durchgreifen, insbesondere jeweils in zumindest eine jeweilige Clipaufnahme (9a, 9b, 9c) der jeweiligen Schlauchenden (4a, 4b, 4c) eingreifen.

7. Schlauchanschluss (1) nach Anspruch 5 und 6, **dadurch gekennzeichnet, dass** zumindest einer der mehreren Arretierungsstege (8a, 8b, 8c) aus der zumindest einen Auflagefläche (7) herausragt, und/oder wobei die zumindest eine Auflagefläche (7) den zumindest einen der mehreren Arretierungsstege (8a, 8b, 8c) umschließt.

8. Schlauchanschluss (1) nach einem der vorhergehenden Ansprüche, **dadurch gekennzeichnet, dass** der Clip (6) die zumindest eine Schlauchaufnahme (3a) der drei Schlauchaufnahmen (3a, 3b, 3c) an zumindest der Hälfte eines Umfangs umgreift.

9. Schlauchanschluss (1) nach einem der vorhergehenden Ansprüche, **dadurch gekennzeichnet, dass** einer der mehreren Arretierungsstege (8a, 8b, 8c) in eine Längsrichtung über einen anderen der mehreren Arretierungsstege (8a, 8b, 8c) hinausragt.

10. Schlauchanschluss (1) nach einem der vorhergehenden Ansprüche, **dadurch gekennzeichnet, dass** der Clip (6) zumindest ein Rastmittel (12a, 12b) aufweist, wobei das zumindest eine Rastmittel (12a, 12b) den Clip (6) in zumindest einer Bewegungsrichtung des Clips (6), vorzugsweise quer zur Einführrichtung der jeweiligen Schlauchenden (4a), arretiert.

11. Schlauchanschluss (1) nach Anspruch 10, **dadurch gekennzeichnet, dass** das zumindest eine Rastmittel (12a, 12b) eine Hinterschneidung am oder im Bereich der zumindest einen Schlauchaufnahme (3a) der drei Schlauchaufnahmen (3a, 3b, 3c) hintergreift.

12. Schlauchanschluss (1) nach Anspruch 10 oder 11, **dadurch gekennzeichnet, dass** das zumindest eine Rastmittel (12a, 12b) den Clip (6) in einer Rastposition arretiert und der Clip (6) in der Rastposition die zumindest eine Schlauchaufnahme (3a) der drei Schlauchaufnahmen (3a, 3b, 3c) nicht durchgreift.

13. Schlauchanschluss nach Anspruch 6, **dadurch gekennzeichnet, dass** der Clip (6) das erste Schlauchende (4a) beidseitig mittels des ersten äußeren Arretierungsstegs (8a) und des mittleren Arretierungsstegs (8c), das zweite Schlauchende (4b) beidseitig mittels des zweiten äußeren Arretierungsstegs (8b) und des mittleren Arretierungsstegs (8c), und das dritte Schlauchende (4c) punktuell mittels des mittleren Arretierungsstegs (8c) sichert.

14. Schlauchanschluss nach Anspruch 6, **dadurch gekennzeichnet, dass** der erste äußere Arretierungssteg (8a) in eine erste Clipaufnahme (9a) des ersten Schlauchendes (4a) eingreift, der zweite äußere Arretierungssteg (8b) in eine zweite Clipaufnahme (9b) des zweiten Schlauchendes (4b) eingreift, und der mittlere Arretierungssteg (8c) in eine dritte Clipaufnahme (9c) des dritten Schlauchendes (4c), die erste Clipaufnahme (9a) und die zweite Clipaufnahme (9b) eingreift.

## Claims

1. Hose connection (1) having at least one hose receptacle (3a) into which a hose end (4a) is insertable, wherein a clip (6) passes through the at least one hose receptacle (3a) in order to engage into a clip receptacle (9a) of the hose end (4a), wherein the clip (6) is formed so as to be self-retaining on the at least one hose receptacle (3a), **characterized in that** the at least one hose receptacle (3a) is one of three hose receptacles (3a, 3b, 3c) into which a respective hose end (4a, 4b, 4c) is insertable, and **in that** the clip (6) comprises multiple arresting webs (8a, 8b, 8c) which pass through the three hose receptacles (3a, 3b, 3c) .

2. Hose connection (1) according to Claim 1, **characterized in that** the at least one hose receptacle (3a) is formed on a housing (2a), and the clip (6) passes through the housing (2a) in the region of the at least one hose receptacle (3a), in particular through an arresting opening (5a) of the housing (2a), wherein the clip (6) is formed so as to be self-retaining on the housing (2a) in the region of the at least one hose receptacle (3a).

3. Hose connection (1) according to either of the preceding claims, **characterized in that** the clip (6) is formed in one piece.

4. Hose connection (1) according to one of the preceding claims, **characterized in that** the clip (6) is formed from an elastic material.

5. Hose connection (1) according to one Claims 2-4, **characterized in that** the clip (6) comprises at least one bearing surface (7) which bears at least partially on the housing (2a), preferably engages at least partially around the housing (2a).

6. Hose connection (1) according to a preceding claim, **characterized in that** the multiple arresting webs (8a, 8b, 8c) comprise a first outer arresting web (8a), a second outer arresting web (8b) and a middle arresting web (8c) which pass through the three hose receptacles (3a, 3b, 3c), in particular in each case engage into at least one respective clip receptacle (9a, 9b, 9c) of the respective hose ends (4a, 4b, 4c) .

7. Hose connection (1) according to Claims 5 and 6, **characterized in that** at least one of the multiple arresting webs (8a, 8b, 8c) protrudes from the at least one bearing surface (7), and/or wherein the at least one bearing surface (7) encloses the at least one of the multiple arresting webs (8a, 8b, 8c) .

8. Hose connection (1) according to one of the preceding claims, **characterized in that** the clip (6) engages around the at least one hose receptacle (3a) of the three hose receptacles (3a, 3b, 3c) over at least half of a circumference.

9. Hose connection (1) according to one of the preceding claims, **characterized in that** one of the multiple arresting webs (8a, 8b, 8c) protrudes beyond another one of the multiple arresting webs (8a, 8b, 8c) in a longitudinal direction.

10. Hose connection (1) according to one of the preceding claims, **characterized in that** the clip (6) has at least one latching means (12a, 12b), wherein the at least one latching means (12a, 12b) arrests the clip (6) in at least one direction of movement of the clip (6), preferably transversely to the direction of insertion of the respective hose ends (4a) .

11. Hose connection (1) according to Claim 10, **characterized in that** the at least one latching means (12a, 12b) engages behind an undercut on or in the region of the at least one hose receptacle (3a) of the three hose receptacles (3a, 3b, 3c).

12. Hose connection (1) according to Claim 10 or 11, **characterized in that** the at least one latching means (12a, 12b) arrests the clip (6) in a latching position, and, in the latching position, the clip (6) does not pass through the at least one hose receptacle (3a) of the three hose receptacles (3a, 3b, 3c).

13. Hose connection according to Claim 6, **characterized in that** the clip (6) secures the first hose end (4a) at both sides by means of the first outer arresting web (8a) and the middle arresting web (8c), the second hose end (4b) at both sides by means of the second outer arresting web (8b) and the middle arresting web (8c), and the third hose end (4c) in a punctiform manner by means of the middle arresting web (8c).

14. Hose connection according to Claim 6, **characterized in that** the first outer arresting web (8a) engages into a first clip receptacle (9a) of the first hose end (4a), the second outer arresting web (8b) engages into a second clip receptacle (9b) of the second hose end (4b), and the middle arresting web (8c) engages into a third clip receptacle (9c) of the third hose end (4c), the first clip receptacle (9a) and the second clip receptacle (9b).

## Revendications

1. Raccord de tuyauterie (1) muni d'au moins un réceptacle de tuyau (3a) dans lequel une extrémité de tuyau (4a) peut être insérée, un clip (6) traversant cet au moins un réceptacle de tuyau (3a) pour pénétrer dans une réceptacle à clip (9a) de l'extrémité de tuyau (4a), lequel clip (6) est configuré de façon auto-maintenue sur l'au moins un réceptacle de tuyau (3a), **caractérisé en ce que** l'au moins un réceptacle de tuyau (3a) fait partie de trois réceptacles de tuyau (3a, 3b, 3c) dans lesquels une extrémité de tuyau correspondante (4a, 4b, 4c) peut être insérée et que le clip (6) comporte de multiples barrettes de blocage (8a, 8b, 8c) qui traversent les trois réceptacles de tuyau (3a, 3b, 3c).

2. Raccord de tuyauterie (1) selon la revendication 1, **caractérisé en ce que** l'au moins un réceptacle de tuyau (3a) est formé au niveau d'un boîtier (2a) et que le clip (6) traverse ce boîtier (2a) dans la région de l'au moins un réceptacle de tuyau (3a), en particulier au niveau d'un orifice de verrouillage (5a) du boîtier (2a), lequel clip (6) est configuré de façon auto-maintenue sur le boîtier (2a), dans la région de l'au moins un réceptacle de tuyau (3a).

3. Raccord de tuyauterie (1) selon une des revendications précédentes, **caractérisé en ce que** le clip (6) est constitué d'une pièce.

4. Raccord de tuyauterie (1) selon une des revendications précédentes, **caractérisé en ce que** le clip (6) est façonné dans une matière élastique.

5. Raccord de tuyauterie (1) selon une des revendications 2 à 4, **caractérisé en ce que** le clip (6) comporte au moins une surface de contact (7) qui s'applique au moins partiellement sur le boîtier (2a), de préférence qui enserre au moins partiellement le boîtier (2a)

6. Raccord de tuyauterie (1) selon une des revendications précédentes, **caractérisé en ce que** les multiples barrettes de blocage (8a, 8b, 8c) comprennent une première barrette de blocage extérieure (8a), une deuxième barrette de blocage extérieure (8b) et une barrette de blocage centrale (8c) qui traversent les trois réceptacles de tuyau (3a, 3b, 3c), en particulier pénètrent chacune dans au moins un réceptacle à clip (9a, 9b, 9c) des extrémités de tuyau (4a, 4b, 4c) correspondantes.

7. Raccord de tuyauterie (1) selon la revendication 5 et 6, **caractérisé en ce qu'**au moins une des multiples barrettes de blocage (8a, 8b, 8c) fait saillie à partir de l'au moins une surface de contact (7) et/ou que l'au moins une surface de contact (7) entoure au moins une des multiples barrettes de blocage (8a, 8b, 8c).

8. Raccord de tuyauterie (1) selon une des revendications précédentes, **caractérisé en ce que** le clip (6) enserre l'au moins réceptacle de tuyau (3a) parmi les trois réceptacles de tuyau (3a, 3b, 3c) sur au moins la moitié d'une périphérie.

9. Raccord de tuyauterie (1) selon une des revendications précédentes, **caractérisé en ce qu'**une des multiples barrettes de blocage (8a, 8b, 8c) dépasse dans un direction longitudinale une autre des multiples barrettes de blocage (8a, 8b, 8c).

10. Raccord de tuyauterie (1) selon une des revendications précédentes, **caractérisé en ce que** le clip (6) comporte au moins un moyen d'encliquetage (12a, 12b), lequel au moins un moyen d'encliquetage (12a, 12b) bloque le clip (6) dans au moins une direction de déplacement du clip (6), de préférence transversalement à la direction d'insertion des extrémités de tuyau correspondantes (4a).

11. Raccord de tuyauterie (1) selon la revendication 10, **caractérisé en ce que** l'au moins un moyen d'encliquetage (12a, 12b) entre en prise par derrière avec une échancrure sur ou dans la région de l'au moins réceptacle de tuyau (3a) parmi les trois réceptacles de tuyau (3a, 3b, 3c).

12. Raccord de tuyauterie (1) selon la revendication 10 ou 11, **caractérisé en ce que** l'au moins un moyen d'encliquetage (12a, 12b) bloque le clip (6) dans une position d'encliquetage et que le clip (6) traverse dans cette position d'encliquetage l'au moins réceptacle de tuyau (3a) parmi les trois réceptacles de tuyau (3a, 3b, 3c).

13. Raccord de tuyauterie selon la revendication 6, **caractérisé en ce que** le clip (6) retient la première extrémité de tuyau (4a) des deux côtés au moyen de la première barrette de blocage extérieure (8a) et de la barrette de blocage centrale (8c), la deuxième extrémité de tuyau (4b) des deux côtés au moyen de la deuxième barrette de blocage extérieure (8b) et de la barrette de blocage centrale (8c), et la troisième extrémité de tuyau (4c) ponctuellement au moyen de la barrette de blocage centrale (8c).

14. Raccord de tuyauterie selon la revendication 6, **caractérisé en ce que** la première barrette de blocage extérieure (8a) pénètre dans un premier réceptacle à clip (9a) de la première extrémité de tuyau (4a), la deuxième barrette de blocage extérieure (8b) pénètre dans un deuxième réceptacle à clip (9b) de la deuxième extrémité de tuyau (4b), et la barrette de blocage centrale (8c) dans un troisième réceptacle à clip (9c) de la troisième extrémité de tuyau (4c), le premier réceptacle à clip (9a) et le deuxième réceptacle à clip (9b).
